# EUROPÄISCHE PATENTSCHRIFT

(11) **EP 2 378 187 B1**
(45) Veröffentlichungstag und Bekanntmachung des Hinweises auf die Patenterteilung: **06.06.2018**
(21) Anmeldenummer: 11155014.1
(22) Anmeldetag: 18.02.2011
(51) Int. Cl.: F21S 8/00

(54) **Modulare Lichtleitervorrichtung für Kraftfahrzeugbeleuchtungseinrichtungen**
Modular light conductor device for motor vehicle illumination systems
Dispositif de guidage de lumière modulaire pour dispositifs d'éclairage de véhicule automobile

(30) Priorität: 06.04.2010 DE 102010013931
(43) Veröffentlichungstag der Anmeldung: 19.10.2011
(73) Patentinhaber: Automotive Lighting Reutlingen GmbH, 72762 Reutlingen (DE)
(72) Erfinder: Gebauer, Matthias, 72770 Reutlingen (DE)
(74) Vertreter: DREISS Patentanwälte PartG mbB

(56) Entgegenhaltungen:
- DE-A1- 10 153 543
- DE-A1-102005 005 860
- DE-A1-102006 032 373
- DE-A1-102008 008 180
- US-A- 6 036 340
- US-A1- 2007 019 429
- US-A1- 2010 008 088

## Beschreibung

Die vorliegende Erfindung betrifft eine Lichtleitervorrichtung nach dem Oberbegriff des Anspruchs 1.

Eine solche Lichtleitervorrichtung ist zu einer Verwendung in einer Kraftfahrzeugbeleuchtungseinrichtung eingerichtet und weist ein Einkoppelmodul, ein von dem Einkoppelmodul baulich getrenntes Lichtleitermodul sowie eine Optik zur Beeinflussung einer Lichtverteilung auf, deren Einfluss auf die Menge an ausgekoppeltem Licht vernachlässigbar ist. Das Lichtleitermodul weist eine erste Stirnfläche und eine zweite Stirnfläche auf, die von der ersten Stirnfläche durch eine Mantelfläche getrennt ist, wobei die erste Stirnfläche dazu eingerichtet ist, vom Einkoppelmodul ausgehendes Licht in das Lichtleitermodul aufzunehmen, und wobei die zweite Stirnfläche dazu eingerichtet ist, über die erste Stirnfläche aufgenommenes Licht aus dem Lichtleitermodul austreten zu lassen.

Eine solche Lichtleitervorrichtung ist aus der US 2007/0019429 bekannt. Bei dem bekannten Gegenstand geht es nach dem Absatz 24 dieser Schrift darum, Licht von Lichtquellen, die in der ebenen Fläche einer Schaltungsplatine angeordnet sind so weiterzuleiten, dass Lichtaustrittsflächen beteiligter Lichtleitermodule in verschiedenen Flächen liegen. Gemäß einem zweiten Ausführungsbeispiel des bekannten Gegenstands können dabei input optical systems und output optical systems verwendet werden, die baulich voneinander getrennt sind. In jedem Fall soll das Licht im Lichtleiter möglichst parallel zu einer Lichtaustrittsfläche propagieren und dort definiert in verschiedene Richtungen gebrochen werden, um eine erwünschte Lichtverteilung zu erzeugen. Dazu weist die Lichtaustrittsfläche entsprechende, die Lichtverteilung erzeugende Streuoptiken auf.

Darüber hinaus ist eine Lichtleitervorrichtung mit den Merkmalen des Oberbegriffs des Anspruchs 1 auch aus der DE 10 2006 032 373 A1 bekannt.

Die DE 101 53 543 A1 zeigt einen lichtleitenden Ring und eine Lichtquelle. Der Ring weist eine als Lichtaustrittsfläche dienende Seite, eine dieser

Seite gegenüberliegende Seite mit Störstellen und eine zwischen den genannten Seiten liegende Mantelfläche auf. In dieser Mantelfläche ist eine Lochung angeordnet, die man als Einkoppeloptik betrachten kann. Diese Einkoppeloptik ist ein Bestandteil des Rings, den man als Lichtleiter (Modul) betrachten kann.

Die Druckschrift DE 10 2005 005 860 A1 zeigt eine Fahrzeugleuchteneinheit mit einem einstückigen Lichtleiter, der eine Lichteintrittsfläche, Lichtumlenkflächen und Lichtaustrittsflächen aufweist.

Die vorliegende Erfindung unterscheidet sich von diesem Stand der Technik durch die kennzeichnenden Merkmale des Anspruchs 1. Dadurch, dass eine Lichtverteilung an einer von der als Lichtaustrittsfläche dienenden zweiten Stirnfläche verschiedenen Fläche der Lichtleitervorrichtung erzeugt wird, kann die zweite Stirnfläche vollkommen glatt gestaltet werden, was aus ästhetischen Gründen angestrebt wird.

Ein weiterer Vorteil der räumlichen Trennung der Erzeugung der Lichtverteilung von der als Lichtaustrittsfläche dienenden zweiten Stirnfläche liegt darin, dass die Mischung der Lichtstrahlen, die aus der Erzeugung der Lichtverteilung resultiert, bereits innerhalb des Lichtleiters stattfindet. Das hat den Effekt, dass die Lichtaustrittsfläche homogen beleuchtet wird. Im Vergleich zu einer inhomogenen Beleuchtung wird dies als Verbesserung des Erscheinungsbildes empfunden.

Die Integration der Streuoptiken in die Mantelfläche hat den Vorteil, dass das Licht bis zum Erreichen der Streuoptik zunächst weitgehend parallel ausgerichtet im Lichtleitermodul propagiert, was die Anzahl der Reflexionen verringert und damit wegen der Vermeidung von Reflexions- und Transmissionsverlusten zu einer hohen Effizienz der Lichtleitung beiträgt. Vorteilhaft ist auch, dass in der Mantelfläche angeordnete Streuoptiken unauffällig in Verbindung mit gekrümmt oder mit einem Knick verlaufenden Lichtleitermodulen verwendet werden können.

Als Folge der räumlichen Trennung der Erzeugung der Lichtverteilung von der Lichtaustrittsfläche ergibt sich der Vorteil einer homogeneren Beleuchtung der Lichtaustrittsfläche.

In einer Ausgestaltung erfolgt die Integration so, dass die Optik zur Beeinflussung der Lichtverteilung ergänzend in der ersten Stirnfläche angeordnet ist.

Auch hier gilt, dass sich als Folge der räumlichen Trennung der Erzeugung der Lichtverteilung von der Lichtaustrittsfläche der Vorteil einer homogeneren Beleuchtung der Lichtaustrittsfläche ergibt.

In einer alternativen Ausgestaltung ist die Optik zur Beeinflussung der Lichtverteilung ergänzend in einer Lichtaustrittsfläche des Einkoppelmoduls angeordnet.

Diese Ausgestaltung hat den zusätzlichen Vorteil, dass sowohl die Kollimationsflächen als auch die Streuoptiken durch einen Prägeprozess erzeugt werden können. Ein solcher Prägeprozess erlaubt eine sehr maßgenaue Fertigung der Flächen, was für die Erzielung gewünschter optischer Eigenschaften ideal ist. Dies ist im Allgemeinen beim Spritzgießen nicht so gut möglich. Da die Lichtleitermodule in der Regel durch Spritzgießen hergestellt werden, können in die Lichtleitermodule integrierte Streuoptiken nicht geprägt werden. Daher ist es vorteilhaft, die Streuoptiken in das Einkoppelmodul zu integrieren. Vorteilhaft ist auch, dass man bei dieser Ausgestaltung für verschiedene Lichtfunktionen gleiche Lichtleiter verwenden kann. Die Anpassung an die Erfordernisse der verschiedenen Lichtfunktionen erfolgt dann durch die Verwendung verschiedener Einkoppelmodule mit verschiedenen Streuoptiken.

Es kommt daher auf die Anforderungen an, ob es besser ist, die Lichtverteilungs-beeinflussenden Streuoptiken auch in das Einkoppelmodul oder nur in das Lichtleitermodul zu integrieren. Weitere Vorteile ergeben sich aus den abhängigen Ansprüchen, der Beschreibung und den beigefügten Figuren.

Bevorzugt ist auch, dass das Lichtleitermodul einen im Raum gekrümmten oder geknickten Verlauf aufweist.

In einer bevorzugten Ausgestaltung besitzt das Lichtleitermodul, abgesehen von zur Erzeugung einer Lichtverteilung dienenden Modulationen seiner Oberfläche, entlang seiner ganzen Länge einen rechteckigen oder nahezu rechteckigen Querschnitt. Das hat den Vorteil, dass die Richtungskomponenten der Lichtstrahlen, die in einem rechteckigen Querschnitt liegen, nicht durch Totalreflexionen an den glatten Wänden des Lichtleitermoduls verändert werden. Als erwünschte Folge bleibt die einmal erzeugte Lichtverteilung über die auf die Erzeugung der Lichtverteilung folgende Länge des Lichtleitermoduls erhalten, was bei nicht-rechtwinkligen Querschnitten nicht der Fall ist.
Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnungen

Ausführungsbeispiele der Erfindung sind in den Zeichnungen dargestellt und werden in der nachfolgenden Beschreibung näher erläutert. Dabei bezeichnen gleiche Bezugszeichen in den verschiedenen Figuren jeweils gleiche Elemente.

Es zeigen, jeweils in schematischer Form:
- Fig. 1: ein erstes Ausführungsbeispiel einer erfindungsgemäßen Lichtleitervorrichtung;
- Fig. 2: ein zweites Ausführungsbeispiel einer erfindungsgemäßen Lichtleitervorrichtung;
- Fig. 3: ein drittes Ausführungsbeispiel einer erfindungsgemäßen Lichtleitervorrichtung;
- Fig. 4: eine Anordnung mehrerer Lichtleitervorrichtungen mit einer ersten Ausgestaltung von Lichtaustrittsflächen;
- Fig. 5: eine Anordnung wie in Fig. 4 mit einer zweiten Ausgestaltung von Lichtaustrittsflächen;
- Fig. 6: verschiedene Lichtleiterquerschnitte zur Erläuterung der Vorteile einer Rechteckform; und
- Fig. 7: Anordnungen von Streuoptiken, die zur Erzeugung einer Lichtverteilung dienen.

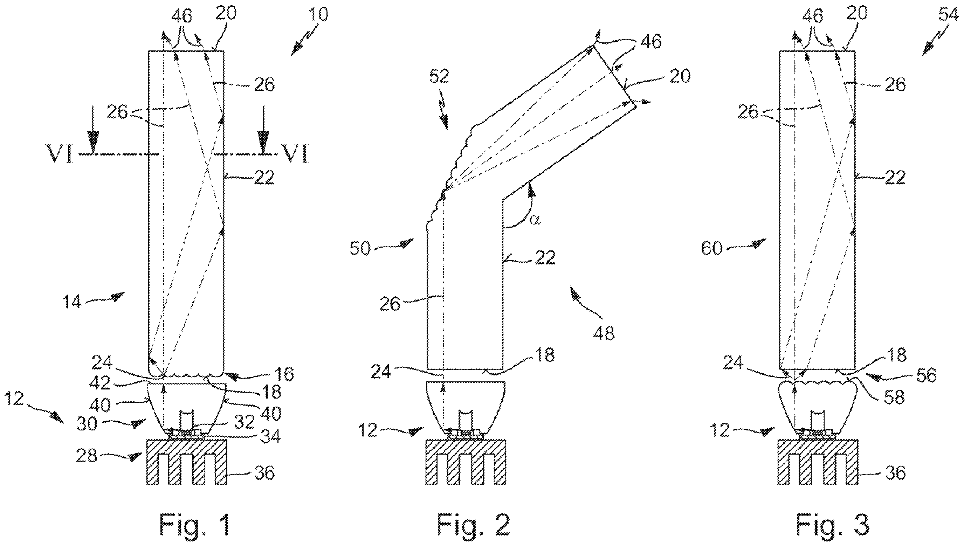

Im Einzelnen zeigt die Fig. 1 eine Lichtleitervorrichtung 10, die zu einer Verwendung in einer Kraftfahrzeugbeleuchtungseinrichtung eingerichtet ist. Der Begriff der Beleuchtungseinrichtung wird in dieser Anmeldung als Oberbegriff für Leuchten und Scheinwerfer verstanden. Der Begriff der Leuchte bezieht sich dabei auf Mittel zur Realisierung von Signal-Lichtfunktionen, die dazu dienen, andere Verkehrsteilnehmer auf das eigene Kraftfahrzeug aufmerksam zu machen. Solche Signal-Lichtfunktionen sind zum Beispiel das Blinklicht, das Tagfahrlicht, das Bremslicht und das Begrenzungslicht. Im Unterschied dazu dienen Scheinwerfer-Lichtfunktionen zur Beleuchtung des Fahrzeugumfeldes, um dem Fahrer zum Beispiel eine Wahrnehmung nicht selbst leuchtender Hindernisse im Fahrweg zu ermöglichen. Solche Lichtfunktionen sind zum Beispiel das Fernlicht und das Abblendlicht.

Die Lichtleitervorrichtung 10 weist ein Einkoppelmodul 12 und ein von dem Einkoppelmodul 12 baulich getrenntes Lichtleitermodul 14, sowie eine Optik 16 zur Beeinflussung einer Lichtverteilung der Lichtleitervorrichtung 10 auf. Das Lichtleitermodul 14 weist eine erste Stirnfläche 18 und eine zweite Stirnfläche 20 auf, die von der ersten Stirnfläche 18 durch eine Mantelfläche 22 getrennt ist. Die erste Stirnfläche 18 ist dazu eingerichtet, vom Einkoppelmodul 12 ausgehendes Licht 24 in das Lichtleitermodul 14 aufzunehmen. Die zweite Stirnfläche 20 ist dazu eingerichtet, über die erste Stirnfläche 18 aufgenommenes Licht 26 aus dem Lichtleitermodul 14 austreten zu lassen. Die Lichtleitervorrichtung 10 zeichnet sich dadurch aus, dass die Optik 16 zur Beeinflussung der Lichtverteilung an einer von der zweiten Stirnfläche 20 verschiedenen Fläche der Lichtleitervorrichtung 10 angeordnet ist. In der Ausgestaltung, die in der Fig. 1 dargestellt ist, ist die Optik 16 in der ersten Stirnfläche 18 angeordnet.

Das Einkoppelmodul 12 weist ein Lichtquellenmodul 28 und ein Optikmodul 30 auf. Das Lichtquellenmodul 28 weist eine Lichtquelle 32, insbesondere eine Halbleiterlichtquelle auf, die auf einem Schaltungsträger 34 montiert und thermisch an einen Kühlkörper 36 angekoppelt ist. Bei der Halbleiterlichtquelle handelt es sich bevorzugt um eine Leuchtdiode oder um eine Anordnung mehrerer Leuchtdioden.

In der Figur 1 ist einem Lichtleitermodul 14 ein individuelles Lichtquellenmodul 28 zugeordnet. Es versteht sich aber, dass diese Zuordnung nicht obligatorisch ist und dass stattdessen zum Beispiel eine Kombination mehrerer Lichtleitermodule 14 ein gemeinsames Lichtquellenmodul 28 aufweisen kann.

Ein Optikmodul 30 ist dazu eingerichtet, von der Lichtquelle 32 ausgehendes Licht zu sammeln und dessen Divergenz zu verringern. Bereits eine einfache Sammellinse kann als Beispiel eines solchen Optikmoduls dienen. Bevorzugt werden jedoch sammelnde Vorsatzoptiken, die eine Totalreflexion nutzen, als Optikmodul 30 verwendet, da diese eine sehr effektive Einkopplung und Auskopplung des Lichtes erlauben, eine Änderung der Lichtrichtung ermöglichen und einen vorbestimmbar gestaltbaren Einfluss auf die Konvergenz ermöglichen.

In der Ausgestaltung, die in der Fig. 1 dargestellt ist, sind Kollimationsflächen 40 des Optikmoduls 30 so angeordnet, dass das Optikmodul 30 an seiner Lichtaustrittsseite 42 weitgehend paralleles und senkrecht zur Lichtaustrittsfläche 42 propagierendes sowie in Bezug auf die Lichtstromdichte homogen über die Lichtaustrittsfläche 42 verteiltes Licht bereitstellt.

Im Inneren des Optikmoduls 30 befindet sich eine Ausnehmung 41, die über der Lichtquelle 32 angeordnet ist und die von inneren Seitenflächen 43 sowie an einem dem Lichtaustrittsende der Ausnehmung 41 gegenüber liegenden Ende durch eine zentral angeordnete, konkav gewölbte oder kegelige Fläche 45 begrenzt wird. Durch die Geometrie der Ausnehmung 41 und der Fläche 45 ist das Optikmodul 30 dazu eingerichtet, in die Ausnehmung 41 einfallendes Licht so auf die Fläche 45 zu reflektieren, dass es dort in eine Richtung gebrochen wird, die ebenfalls weitgehend senkrecht zur Lichtaustrittfläche 42 liegt. Im Ergebnis wird damit durch die Geometrie der inneren Ausnehmung 41 und der äußeren Kollimationsfläche 40 weitgehend paralleles und von innen senkrecht auf die Lichtaustrittsfläche 42 einfallendes Licht sowie über die Lichtaustrittsfläche 42 homogen verteiltes Licht bereit gestellt.

Dieses Licht wird über die erste Stirnfläche 18 in das Lichtleitermodul 14 eingespeist. In der ersten Stirnfläche 18 ist die Optik 16 zur Beeinflussung der Lichtverteilung angeordnet. Die Optik 16 weist Streuoptiken auf, die Licht beim Passieren einer Grenzfläche in durch die Form und Anordnung der Streuoptiken vorbestimmte Richtungen brechen. Diese Streuoptiken besitzen bevorzugt eine Kissen-artig gekrümmte Oberfläche, ohne dass die Erfindung auf eine solche spezielle Ausgestaltung beschränkt ist. Unter einer Kissen-artig gekrümmten Fläche wird hier eine in zwei Raumrichtungen konkav oder konvex gekrümmte Fläche verstanden. Alternativ oder ergänzend zu Kissen-artig gekrümmten Oberflächen können auch andere geometrische Formen wie Prismen, Keile, Linsen oder Walzen verwendet werden.

Durch die als Folge der definierten Lichtbrechung an den Streuoptiken der Optik 16 geänderten Richtungen des innerhalb des Lichtleitermoduls 14 propagierenden Lichtes ändern sich auch die Richtungen, unter denen das Licht das Lichtleitermodul 14 an der bevorzugt glatten zweiten Stirnfläche 20 verlässt. Die resultierende Lichtverteilung wird daher durch die Optik 16 weitgehend bestimmt, zumindest aber beeinflusst.

Darüber hinaus kann die Lichtverteilung über weitere Merkmale wie die Form der zweiten Stirnfläche 20 beeinflusst werden. So wirkt eine konvexe Form eher aufweitend, während eine konkave Form bündelnd und eine ebene Form eher neutral wirkt.

Dagegen übt die Optik 16 auf die Menge des ausgekoppelten Lichtes 46 allenfalls einen vernachlässigbaren Einfluss auf: Ein Ersetzen der Optik 16 durch eine glatte Lichteintrittsfläche würde die Verteilung des Lichtes 46, nicht aber dessen Menge ändern. Die Streuoptiken der Optik 16 sind insofern von bekannten Auskoppelstrukturen funktional verschieden. Die funktionalen Unterschiede ergeben sich insbesondere durch die langgestreckte Gestalt des Lichtleitermoduls 14 und die weitgehend parallel zueinander und weitgehend senkrecht zur Lichtausbreitung angeordneten Stirnflächen 18 und 20.

Fig. 2 zeigt ein zweites Ausführungsbeispiel einer erfindungsgemäßen Lichtleitervorrichtung. Im Einzelnen zeigt die Fig. 2 ebenfalls eine Lichtleitervorrichtung 48, die zu einer Verwendung in einer Kraftfahrzeugbeleuchtungseinrichtung eingerichtet ist. Die Lichtleitervorrichtung 48 weist das bereits beschriebene Einkoppelmodul 12 und ein von dem Einkoppelmodul 12 baulich getrenntes Lichtleitermodul 50, sowie eine Optik 52 zur Beeinflussung einer Lichtverteilung der Lichtleitervorrichtung 48 auf.

Das Lichtleitermodul 50 weist eine erste Stirnfläche 18 und eine zweite Stirnfläche 20 auf, die von der ersten Stirnfläche 18 durch eine Mantelfläche 22 getrennt ist. Die erste Stirnfläche 18 ist dazu eingerichtet, vom Einkoppelmodul 12 ausgehendes Licht 24 in das Lichtleitermodul 50 aufzunehmen. Die zweite Stirnfläche 20 ist dazu eingerichtet, über die erste Stirnfläche 18 aufgenommenes Licht 26 aus dem Lichtleitermodul 50 austreten zu lassen. Die Lichtleitervorrichtung 48 zeichnet sich dadurch aus, dass die Optik 52 zur Beeinflussung der Lichtverteilung an einer von der zweiten Stirnfläche 20 verschiedenen Fläche der Lichtleitervorrichtung 10 angeordnet ist.

Im Unterschied zum ersten Ausführungsbeispiel ist die Optik 52 zur Beeinflussung der Lichtverteilung nicht in der ersten Stirnfläche 18, sondern in der Mantelfläche 22 angeordnet. Diese Ausgestaltung eignet sich insbesondere bei Lichtleitervorrichtungen, die nicht geradlinig verlaufen und stattdessen eine Krümmung, einen Knick oder einen gewinkelten Verlauf aufweisen.

Der Knick, die Krümmung oder der gewinkelte Verlauf schließt dabei jeweils einen maximalen Winkel α ein, der sich dadurch auszeichnet, dass an der Fläche 52 noch interne Totalreflexion in wesentlichem Umfang auftritt, so dass der größte Teil, insbesondere mehr als 90 %, des von innen auf die Fläche 52 einfallenden Lichtes dort reflektiert und nicht aus dem Lichtleitermodul 50 herausgebrochen wird.

Die Optikfläche ist dann jeweils bevorzugt auf der äußeren Seite der Richtungsänderung, an der das Licht den vergleichsweise längeren Weg zurücklegt, angeordnet. Die erste Stirnfläche 18 ist dagegen bevorzugt glatt ausgeführt, so dass das von dem Einkoppelmodul 12 parallelisierte Licht der Lichtquelle zunächst weitgehend parallel in dem Lichtleitermodul 50 propagiert.

Die Optik 52 weist Streuoptiken auf, die Licht bei einer Reflexion an einer Grenzfläche der Streuoptiken in durch die Form und Anordnung der Streuoptiken vorbestimmte Richtungen reflektieren. Diese Streuoptiken besitzen bevorzugt eine Kissen-artig gekrümmte Oberfläche, ohne dass die Erfindung auf eine solche spezielle Ausgestaltung beschränkt ist. Alternativ oder ergänzend zu Kissen-artig gekrümmten Oberflächen können auch andere geometrische Formen wie Prismen, Keile oder Linsen verwendet werden.

Durch die als Folge der definierten Reflexion an den Streuoptiken der Optik 52 geänderten Richtungen des innerhalb des Lichtleitermoduls 50 propagierenden Lichtes ändern sich auch die Richtungen, unter denen das im Lichtleitermodul 50 propagierende Licht 26 das Lichtleitermodul 50 an der bevorzugt glatten zweiten Stirnfläche 20 verlässt. Daher gilt auch hier, dass die resultierende Lichtverteilung durch die Optik 52 weitgehend bestimmt, zumindest aber beeinflusst wird. Ferner gilt auch hier, dass die Lichtverteilung über weitere Merkmale wie die Form der zweiten Stirnfläche 20 beeinflussbar ist, wie es im Zusammenhang mit der Fig. 1 erläutert worden ist.

Darüber hinaus gilt auch für das Ausführungsbeispiel der Figur 2, dass die Optik 52 auf die Menge des ausgekoppelten Lichtes 46 allenfalls einen vernachlässigbaren Einfluss ausübt. Ein Ersetzen der Optik 52 durch eine glatte Reflexionsfläche würde die Verteilung des aus der zweiten Stirnfläche 20 ausgekoppelten Lichtes 46, nicht aber dessen Menge ändern. Die Streuoptiken der Optik 52 sind insofern von bekannten Auskoppelstrukturen funktional verschieden. Die funktionalen Unterschiede ergeben sich insbesondere durch die langgestreckte Gestalt des Lichtleitermoduls 50 und die weitgehend senkrecht zur Lichtausbreitung angeordneten Stirnflächen 18 und 20.

Die Fig. 3 zeigt ein drittes Ausführungsbeispiel einer erfindungsgemäßen Lichtleitervorrichtung. Im Einzelnen zeigt die Fig. 3 eine Lichtleitervorrichtung 54, die zu einer Verwendung in einer Kraftfahrzeugbeleuchtungseinrichtung eingerichtet ist. Von den Gegenständen der Figuren 1 und 2 unterscheidet sich die Lichtleitervorrichtung 54 des dritten Ausführungsbeispiels dadurch, dass eine Optik 56 zur Beeinflussung der Lichtverteilung in einer Lichtaustrittsfläche 58 des Einkoppelmoduls 12 angeordnet ist. Neben dem Einkoppelmodul 12 weist die Lichtleitervorrichtung 54 ein von dem Einkoppelmodul 12 baulich getrenntes Lichtleitermodul 60 auf.

Das Lichtleitermodul 60 weist eine erste Stirnfläche 18 und eine zweite Stirnfläche 20 auf, die von der ersten Stirnfläche 18 durch eine Mantelfläche 22 getrennt ist. Die erste Stirnfläche 18 ist dazu eingerichtet, vom Einkoppelmodul 12 ausgehendes Licht 24 in das Lichtleitermodul 60 aufzunehmen. Die zweite Stirnfläche 20 ist dazu eingerichtet, über die erste Stirnfläche 18 aufgenommenes Licht 26 aus dem Lichtleitermodul 60 austreten zu lassen. Die Lichtleitervorrichtung 54 zeichnet sich also auch bei dem dritten Ausführungsbeispiel dadurch aus, dass die Optik 56 zur Beeinflussung der Lichtverteilung an einer von der zweiten Stirnfläche 20 verschiedenen Fläche der Lichtleitervorrichtung 10 angeordnet ist.

Im Unterschied zum ersten Ausführungsbeispiel ist die erste Stirnfläche 18 bevorzugt glatt ausgeführt, und die Lichtverteilungs-erzeugende Optik 56 ist in die Lichtaustrittsfläche 58 des Einkoppelmoduls integriert. Die Optik 56 weist Streuoptiken auf, die Licht bei einem Durchtritt einer Grenzfläche der Streuoptiken in durch die Form und Anordnung der Streuoptiken vorbestimmte Richtungen brechen. Diese Streuoptiken besitzen auch hier bevorzugt eine Kissen-artig gekrümmte Oberfläche, ohne dass die Erfindung auf eine solche spezielle Ausgestaltung beschränkt ist. Alternativ oder ergänzend zu Kissen-artig gekrümmten Oberflächen können auch hier andere geometrische Formen wie Prismen, Keile, Linsen oder Walzen verwendet werden.

Als Folge der definierten Brechung an den Streuoptiken der Optik 56 propagiert das Licht innerhalb des Lichtleitermoduls 60 nicht mehr parallel zu der Mantelfläche sondern in durch die definierte Brechung definierten Richtungen. Im Vergleich zu parallel propagierendem Licht ändern sich damit auch die Richtungen, unter denen das im Lichtleitermodul 60 propagierende Licht 26 das Lichtleitermodul 60 an der bevorzugt glatten zweiten Stirnfläche 20 verlässt. Daher gilt auch hier, dass die resultierende Lichtverteilung durch die Optik 56 weitgehend bestimmt, zumindest aber beeinflusst wird.

Ferner gilt auch hier, dass die Lichtverteilung über weitere Merkmale wie die Form der zweiten Stirnfläche 20 beeinflussbar ist, wie es im Zusammenhang mit der Fig. 1 erläutert worden ist.

Auch hier übt die Optik 56 auf die Menge des ausgekoppelten Lichtes 46 allenfalls einen vernachlässigbaren Einfluss auf: Ein Ersetzen der Optik 56 durch eine glatte Fläche würde die Verteilung des Lichtes 46, nicht aber dessen Menge ändern. Die Streuoptiken der Optik 56 sind insofern auch bei diesem Ausführungsbeispiel von bekannten Auskoppelstrukturen funktional verschieden. Die funktionalen Unterschiede ergeben sich insbesondere durch die langgestreckte Gestalt des Lichtleitermoduls 14, die parallel zueinander und weitgehend senkrecht zur Lichtausbreitung angeordneten Stirnflächen 18 und 20.

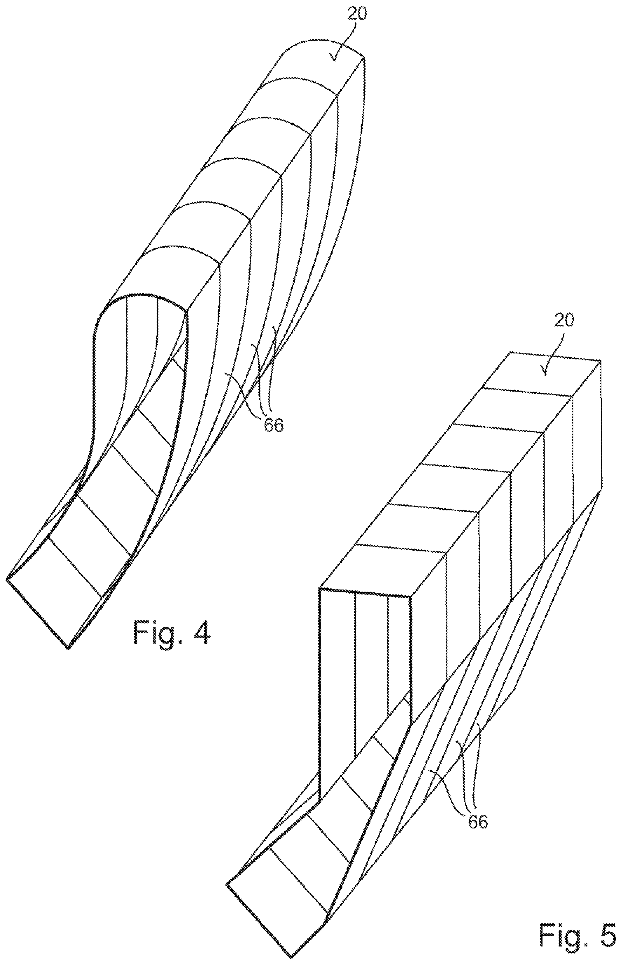

Figur 4 zeigt eine Anordnung mehrerer Lichtleitervorrichtungen mit einer ersten Ausgestaltung von Lichtaustrittsflächen 20. Die Lichtaustrittsflächen 20 sind hier in einer Raumrichtung walzen-artig konvex gekrümmt und weisen in der anderen Raumrichtung keine Krümmung auf. Die Lichtleitermodule 66 zeichnen sich durch einen im Raum gekrümmten Verlauf aus, wobei ihr Querschnitt in der dargestellten Ausgestaltung jeweils über ihre ganze Länge rechteckig ist.

Figur 5 zeigt eine Anordnung mehrerer Lichtleitervorrichtungen 66 mit rechteckig-ebenen Lichtaustrittsflächen 20. Die Lichtleitermodule 66 der Fig. 5 zeichnen sich durch einen im Raum geknickten Verlauf aus. Auch hier gilt, dass ihr Querschnitt in der dargestellten Ausgestaltung jeweils über ihre ganze Länge rechteckig ist.

Wesentlich ist sowohl beim Gegenstand der Fig. 4 als auch beim Gegenstand der Fig. 5, dass es sich jeweils um glatte Lichtaustrittsflächen 20 handelt, was dadurch ermöglicht wird, dass die lichtverteilungs-erzeugende Optik gerade nicht in der Lichtaustrittsfläche 20 angeordnet ist. Die Form der Lichtaustrittsfläche 20 ist in Abhängigkeit von der geforderten Lichtverteilung und von gestalterischen Anforderungen frei wählbar und kann zum Beispiel auch Kissen-artig hervorgewölbt, also in zwei Raumrichtungen konvex, oder in einer oder zwei Raumrichtungen konkav, oder in eine Raumrichtung konkav und in der anderen Raumrichtung konvex, usw. sein.

Die Lichtleitervorrichtungen 66 der Figuren 4 und/oder 5 entsprechen im Übrigen den Lichtleitervorrichtungen 10, 48 oder 54, wie sie in dieser Anmeldung vorgestellt worden sind.

Das aus den Figuren 4 und 5 ersichtliche Zusammensetzen von Lichtleitervorrichtungen 66 aus einer Mehrzahl von einzelnen in dieser Anmeldung vorgestellten Lichtleitervorrichtungen, die selbst modulartig aufgebaut sind, eröffnet dem Gestalter und Konstrukteur die Möglichkeit, eine Vielzahl unterschiedlicher Beleuchtungseinrichtungen und Lichtfunktionen unter Rückgriff auf eine überschaubare Anzahl von Komponenten anzubieten.

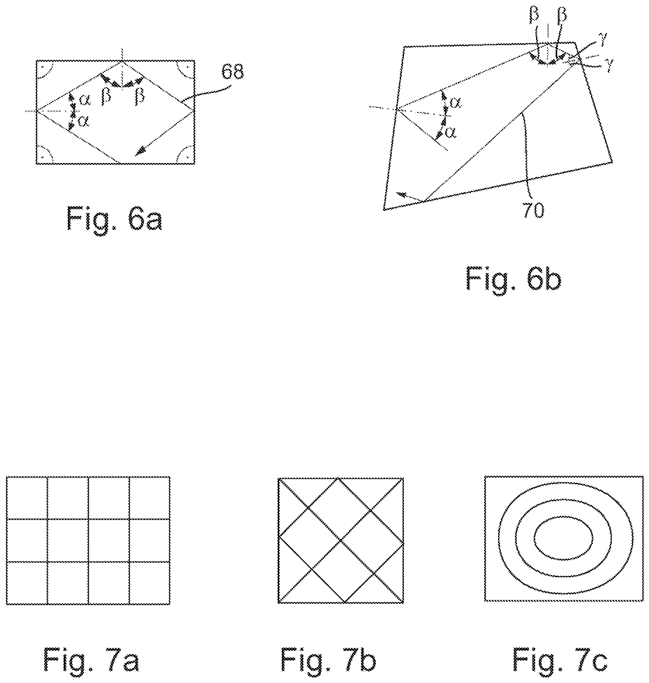

Figur 6 zeigt im Teil 3a einen Querschnitt VI-VI durch ein Lichtleitermodul 14 mit rechteckigem Querschnitt und im Teil 3b einen vergleichbaren schiefwinkligen Querschnitt. Die Pfeile 68, 70 stellen jeweils in den Querschnittsflächen liegende Richtungskomponenten eines einzelnen Lichtstrahls im Lichtleitermodul 14 dar. Ein solcher Lichtstrahl besitzt auch eine senkrecht zur Zeichenebene gerichtete Komponente, so dass die Pfeile 68, 70 zum Beispiel als Komponenten des im Lichtleitermodul propagierenden Lichts 26 betrachtet werden können. Wie ein Vergleich der Figuren 6a und 6b zeigt, läuft die Komponente 68 immer auf dem gleichen Pfad durch den rechtwinkligen Querschnitt des Lichtleitermoduls aus der Fig. 6a, während die Komponente 70 bei jedem Umlauf einen neuen Pfad im Lichtleitermodul mit dem schiefwinkligen Querschnitt der Fig. 6b bildet. Das bedeutet, dass eine zum Beispiel beim Eintritt in das Lichtleitermodul 14 erzeugte Lichtverteilung im Fall des rechteckigen Querschnitts erhalten bleibt, während sie im Fall des schiefwinkligen Querschnitts aus Figur 6b mit zunehmendem Abstand von der lichtverteilungserzeugenden Fläche verändert wird.

Die Lichtverteilung bleibt zumindest im Wesentlichen erhalten, wenn das Lichtleitermodul zwar nicht mehr ideal rechteckig, aber zumindest noch nahezu rechteckig ist. Dabei gilt ein Lichtleitermodul dann als nahezu rechteckig, wenn sein Umfang zu wenigstens 90% aus zwei Paaren von jeweils zueinander parallelen Geraden besteht, wobei die Geraden eines Paars orthogonal zu den Geraden des anderen Paars angeordnet sind. Bis zu 10% der Länge können zum Beispiel für gebrochene Kanten an den Ecken verbraucht werden.

Figur 7 zeigt Draufsichten auf verschiedene Ausgestaltungen einer lichtverteilungserzeugenden Fläche, zum Beispiel der Einkoppelfläche 18 aus der Figur 1, der Fläche 52 aus der Figur 2 und der Fläche 58 aus der Figur 3. Figur 7a zeigt eine matrixartige Anordnung von Streuoptiken 70, wobei die Zeilen parallel zu zwei parallelen Kanten des rechteckigen Querschnitts des Lichtleiters und die Spalten zu den beiden anderen parallelen Kanten des rechteckigen Querschnitts des Lichtleiters parallel sind. Diese Streuoptiken besitzen bevorzugt eine Kissen-artig gekrümmte Oberfläche, ohne dass die Erfindung auf eine solche spezielle Ausgestaltung beschränkt ist. Unter einer Kissen-artig gekrümmten Fläche wird hier eine in zwei Raumrichtungen konkav oder konvex gekrümmte Fläche verstanden. Alternativ oder ergänzend zu Kissen-artig gekrümmten Oberflächen können auch andere geometrische Formen wie Prismen, Keile, Linsen oder Walzen verwendet werden.

Die Streuoptiken 70 können alternativ auch diagonal zur rechteckigen Fläche des Lichtleiters angeordnet sein. Eine Ausgestaltung einer solchen Anordnung ist in der Fig. 7b dargestellt. Eine ringförmige Anordnung, wie Sie in der Figur 7c dargestellt ist, kann ebenfalls verwendet werden.

Es hängt letztlich von der zu erzeugenden Lichtverteilung ab, welche Ausgestaltung in einem konkreten Fall zu empfehlen ist. Alternativ zur Erzeugung der Lichtverteilung durch Streuoptiken, die in einer Fläche angeordnet sind, können die Lichtverteilungen auch durch Streuoptiken erzeugt werden, die in mehreren Flächen angeordnet sind.

Für die Anordnung, wie sie in der Figur 1 dargestellt ist, ist es zum Beispiel denkbar, Walzenstrukturen in der Lichteintrittsfläche des Lichtleitermoduls 14 und zusätzliche Walzenstrukturen in der Lichtaustrittsfläche des Einkoppelmoduls 12 zu verwenden, wobei die Walzenstrukturen in der einen Fläche in einer Ausgestaltung parallel zu den Walzenstrukturen in der anderen Fläche angeordnet sind. In einer alternativen Ausgestaltung schließt die Ausrichtung der Walzenstrukturen in der einen Fläche mit der Ausrichtung der Walzenstrukturen in der anderen Fläche einen Winkel ein. Dabei ist insbesondere eine orthogonal gekreuzte Anordnung bevorzugt.

Die hier vorgestellten Lichtleitervorrichtungen werden bevorzugt in Kraftfahrzeugbeleuchtungseinrichtungen verwendet, wobei die Stirnflächen als sichtbar leuchtende Flächen dienen und wobei die Einkoppelmodule 12 und gegebenenfalls den Einkoppelmodulen 12 benachbarte erste Abschnitte der Lichtleitermodule durch Blenden und/oder eine Abdeckrahmen gegen Einblicke von außen abgedeckt sind.

## Patentansprüche

1. Lichtleitervorrichtung (10), die zu einer Verwendung in einer Kraftfahrzeugbeleuchtungseinrichtung eingerichtet ist und die ein Einkoppelmodul (12) aufweist, das ein Lichtquellenmodul (28) und ein von dem Lichtquellenmodul separates Optikmodul (30) aufweist, und die ein von dem Einkoppelmodul (12) baulich getrenntes Lichtleitermodul (14) aufweist, das eine erste Stirnfläche und eine zweite Stirnfläche (18) aufweist, die von der ersten Stirnfläche (20) durch eine Mantelfläche (22) getrennt ist, wobei die erste Stirnfläche (18) dazu eingerichtet ist, vom Einkoppelmodul (12) ausgehendes Licht (24) in das Lichtleitermodul (14) aufzunehmen, und wobei die zweite Stirnfläche (20) dazu eingerichtet ist, über die erste Stirnfläche (18) aufgenommenes Licht (26) aus dem Lichtleitermodul (14) austreten zu lassen, **dadurch gekennzeichnet, dass** das Lichtleitermodul (14) eine Optik (52) aufweist, die an einer von der-zweiten Stirnfläche (20) verschiedenen Mantelfläche (22) der Lichtleitervorrichtung (10) angeordnet ist, und welche Optik (52) nicht in der ersten Stirnfläche (18) sondern in der Mantelfläche (22) angeordnet ist und dazu eingerichtet ist, die Verteilung des aus der zweiten Stirnfläche 20 ausgekoppelten Lichts (46) beeinflussen und deren Einfluss auf die Menge des aus der zweiten Stirnfläche ausgekoppelten Lichtes vernachlässigbar ist, und dass die Optik (52) zur Beeinflussung der Lichtverteilung Streuoptiken aufweist, die das Licht bei einer Reflexion an den Streuoptiken in durch die Form und Anordnung der Streuoptiken vorbestimmte Richtungen reflektieren.

2. Lichtleitervorrichtung (10) nach einem der vorhergehenden Ansprüche, **dadurch gekennzeichnet, dass** das Einkoppelmodul (12) dazu eingerichtet ist, paralleles und homogen über eine Lichtaustrittsfläche (42) des Einkoppelmoduls (12) verteiltes Licht zu erzeugen.

3. Lichtleitervorrichtung (10; 48; 54) nach einem der vorhergehenden Ansprüche, **dadurch gekennzeichnet, dass** die Streuoptiken eine Kissen-artig gekrümmte Oberfläche besitzen.

4. Lichtleitervorrichtung (10; 48; 54) nach einem der vorhergehenden Ansprüche, **dadurch gekennzeichnet, dass** die zweite Stirnfläche (20) einen rechteckigen Querschnitt aufweist.

5. Lichtleitervorrichtung (10; 48; 54) nach einem der vorhergehenden Ansprüche, **dadurch gekennzeichnet, dass** die zweite Stirnfläche eben ist.

6. Lichtleitervorrichtung (10; 48; 54) nach einem der vorhergehenden Ansprüche, **dadurch gekennzeichnet, dass** die zweite Stirnfläche (20) eine im Raum gekrümmte Oberfläche aufweist.

7. Lichtleitervorrichtung (10; 40; 54) nach einem der vorhergehenden Ansprüche, **dadurch gekennzeichnet, dass** ihr Lichtleitermodul (14; 50; 60) einen im Raum gekrümmten oder geknickten Verlauf aufweist.

8. Lichtleitervorrichtung (10; 40; 54) nach einem der vorhergehenden Ansprüche, **dadurch gekennzeichnet, dass** ihr Lichtleitermodul (14; 50; 60) über seine ganze Länge rechteckig oder nahezu rechteckig ist.

## Claims

1. A light conductor device (10), which is arranged for use in a motor vehicle illumination system and has a coupling module (12) that has a light source module (28) and an optical module (30) that is separate from the light source module, and which has a light conductor module (14) structurally separated from the coupling module (12), the coupling module having a first end face and a second face (18) that is separated from the first end face (20) by a jacket face (22), and the first end face (18) is arranged for receiving light (24), originating at the coupling module (12), into the light conductor module (14), and the second end face (20) is arranged for causing light (26), received via the first end face (18), to exit from the light conductor module (14), **characterized in that** the light conductor module (14) has an optical module (52), which is located on a jacket face (22) of the light conductor device (10), which jacket face is different from the second end face (20), and which optical module (52) is located not in the first end face (18) but in the jacket face (22) and is arranged for varying the distribution of the light (46) which is out-coupled from the second end face (20) and the influence of which on the amount of light out-coupled from the second end face is negligible; and that the optical module (52), for varying the distribution of the light, has scattering lenses, which, upon a reflection at the scattering lenses, reflect the light in directions predetermined by the shape and location of the scattering lenses.

2. The light conductor device (10) of one of the foregoing claims, **characterized in that** the coupling module (12) is arranged for generating light that is parallel and is distributed homogeneously over a light exit face (42) of the coupling module (12).

3. The light conductor device (10; 48; 54) of one of the foregoing claims, **characterized in that** the scattering lenses have a surface curved in pillow-like fashion.

4. The light conductor device (10; 48; 54) of one of the foregoing claims, **characterized in that** the second end face (20) has a rectangular cross section.

5. The light conductor device (10; 48; 54) of one of the foregoing claims, **characterized in that** the second end face (20) is flat.

6. The light conductor device (10; 48; 54) of one of the foregoing claims, **characterized in that** the second end face (20) has a surface that is curved in space.

7. The light conductor device (10; 40; 54) of one of the foregoing claims, **characterized in that** its light conductor module (14; 50; 60) has a course that is curved or bent in space.

8. The light conductor device here (10; 40; 54) of one of the foregoing claims, **characterized in that** its light conductor module (14; 50; 60) is rectangular, or nearly rectangular, over its entire length.

## Revendications

1. Dispositif guide de lumière (10) agencé pour être utilisé dans un dispositif d'éclairage de véhicule automobile et qui comporte un module de couplage (12) doté d'un module de source lumineuse (28) et d'un module optique (30) séparé du module de source lumineuse, et un module guide de lumière (14) séparé du module de couplage (12) et qui présente une première surface frontale et une seconde surface frontale (18) séparée de la première surface frontale (20) par une surface d'enveloppe (22), la première surface frontale (18) étant agencée pour recevoir dans le module guide de lumière (14) la lumière (24) partant du module de couplage (12), et la seconde surface frontale (20) étant agencée pour laisser sortir du module guide de lumière (14) la lumière (26) reçue via la première surface frontale (18), **caractérisé en ce que** le module guide de lumière (14) comporte une optique (52) qui est disposée sur une surface d'enveloppe (22) du dispositif guide de lumière (10) différente de la seconde surface frontale (20), laquelle optique (52) est disposée non pas dans la première surface frontale (18) mais dans la surface d'enveloppe (22) et est agencée pour influer sur la répartition de la lumière (46) extraite de la seconde surface frontale (20), son l'influence sur la quantité de lumière extraite de la seconde surface frontale étant négligeable, et **en ce que** l'optique (52) présente, pour influer sur la répartition de lumière, des optiques de dispersion qui, lors d'une réflexion sur les optiques de dispersion, réfléchissent la lumière dans des directions prédéterminées par la forme et l'agencement des optiques de dispersion.

2. Dispositif guide de lumière (10) selon l'une des revendications précédentes, **caractérisé en ce que** le module de couplage (12) est agencé pour produire de la lumière parallèle et répartie de façon homogène sur une surface de sortie de lumière (42) du module de couplage (12).

3. Dispositif guide de lumière (10; 48; 54) selon l'une des revendications précédentes, **caractérisé en ce que** les optiques de dispersion possèdent une surface incurvée à la manière d'un coussin.

4. Dispositif guide de lumière (10; 48; 54) selon l'une des revendications précédentes, **caractérisé en ce que** la seconde surface frontale (20) présente une section rectangulaire.

5. Dispositif guide de lumière (10; 48; 54) selon l'une des revendications précédentes, **caractérisé en ce que** la seconde surface frontale est plane.

6. Dispositif guide de lumière (10; 48; 54) selon l'une des revendications précédentes, **caractérisé en ce que** la seconde surface frontale (20) présente une surface incurvée dans l'espace.

7. Dispositif guide de lumière (10; 48; 54) selon l'une des revendications précédentes, **caractérisé en ce que** son module guide de lumière (14; 50; 60) a une allure incurvée dans l'espace ou coudée.

8. Dispositif guide de lumière (10; 48; 54) selon l'une des revendications précédentes, **caractérisé en ce que** son module guide de lumière (14; 50; 60) est rectangulaire ou presque rectangulaire sur toute sa longueur.
